# EUROPEAN PATENT APPLICATION

(11) **EP 1 819 164 A1**
(43) Date of publication of application: **15.08.2007**
(21) Application number: 05811758.1
(22) Date of filing: 01.12.2005
(51) Int. Cl.: H04N 7/173, G06F 12/00, G06F 21/24, H04N 5/765

(54) **META DATA MANAGEMENT DEVICE AND META DATA USE DEVICE**

(30) Priority: 02.12.2004 JP 2004349739
(71) Applicant: Matsusita Electric Industrial Co., Ltd., Kadoma-shi, Osaka 571-8501 (JP)
(72) Inventor: KATO, Naonori c/o Matsushita Electr.Industr., Chuo-ku,Osaka-shi,Osaka 540-6319 (JP); NAKATSUKA, Monta c/o Matsushita Electr.Industr., Chuo-ku,Osaka-shi,Osaka 540-6319 (JP); SUZUKI, Yousuke c/o Matsushita Electr.Industr., Chuo-ku,Osaka-shi,Osaka 540-6319 (JP)
(74) Representative: Pautex Schneider, Nicole Véronique
(86) International application number: PCT/JP2005/022119
(87) International publication number: WO 2006/059696

(57) **Abstract**

For server apparatuses which accumulate content files and attached information about the contents, there has not been a means to distinguish items of the information which the server apparatuses permit editing of. Therefore, when a different terminal connected to the network is to modify the attached information about the contents, there has been a risk that the attached information about the contents are disorderly modified.

Provided is a mechanism for having a means to clearly distinguish an item which is permitted for modification from an item which is not permitted for modification, and for clearly indicating the distinction to the different terminal through which a remote operation is performed.

## Description

### Technical Field

The present invention relates to a metadata management device and a metadata use device, and particularly to a device which sends a multimedia content via a network and to a device which receives the multimedia content via the network.

### Background Art

Recently, along with the development of broadband internet access technologies such as xDSL and optical fiber, there has been a rapid increase in internet access, whether for business or home use. In addition, a home network environment in which personal computers (PCs) and household electrical appliances at home are connected via Ethernet ® or a wireless LAN has become popular. Under such circumstances, Internet Protocol (IP) defined by the Internet Engineering Task Force (IETF) has enabled mutual connections, not only among the Personal Computers (PCs), but also among home appliances such as TVs, Digital Versatile Disk (DVD) recorders, air conditioners and refrigerators.

Application programs for use on the Internet and home networks include an application program for viewing videos and listening to music between home appliances and PCs. For example, there is a case where a TV program which has been recorded by a DVD recorder located in a living room is watched using a TV located in another room, and a case where a music file which has been ripped to a PC is downloaded into a mobile appliance so as to enjoy the music.

As a protocol for handling such image and music contents in the home network, there is the Universal Plug and Play Audio/Video (UPnP-AV) architecture. The UPnP-AV does not define a system of transmitting a content file itself, but defines a service related to attached information (metadata) about a content file and a service related to a connection. Especially, the Content Directry Service (CDS) which is a service related to attached information (metadata) about a content file is the most basic service among the services defined by the UPnP-AV architecture. When a user of an appliance uses the CDS to obtain a list of attached information (metadata) about content files that the user wishes to view, and select a content file that the user wishes to view, the content file is transferred. The attached information (metadata) about contents is written in the DIDL-Lite format, and in addition to information regarding a URL related to transfer of a content file and the like, information about various items such as a title of the content and a genre of the content can be written.

As main functions of the CDS, in addition to obtaining attached information (metadata) about a content, the attached information itself about the content can also be generated, deleted and corrected. In other words, it is possible to edit the attached information about the content through a network via an IP network. For example, with a TV program recorded by a DVD recorder and the like, there is a case where an entry of characters such as a title and a genre is automatically recorded at the time of programmed recording due to use of the Electronic Program Guide (EPG) and the like. However, the character string of the title and the like provided by the EPG provider is not always appropriate. In such case, while it is possible to correct the character string using the main body of the DVD recorder, it is more convenient, compared to editing character by character using a remote control and the like, to edit the character string using a PC and the like having a superior man-machine interface such as a keyboard. Use of the CDS functions via the IP network allows editing work to be performed from the PC and the like.

Concerning the editing of attached information (metadata) about a content described above, attached information about a content should normally be managed by the content file storage side, and thus disorderly correction of the attached information (metadata) by the remote side via the IP network should not be possible. Accordingly, with a conventional CDS, editability of attached information (metadata) about a content is determined by a setting of "restrected", which is one of the properties of attached information about contents managed by the server side.

There is a technique disclosed in Patent Reference 1, for example, as a conventional technique disclosed in relation to generation, deletion, and correction of attached information about a content. Patent Reference 1 discloses a structure which enables recording of attached information (metadata) for identifying video data and audio data, as well as recording of video data and audio data.
Patent Reference 1: Japanese Patent Application Laid-Open Publication No. 2001-292413.

### Disclosure of Invention

### Problems that Invention is to Solve

However, the conventional technique does not include a means for clearly indicating a rewritable range of each metadata.

Furthermore, the conventional setting of "restrected" is limited to "TRUE" or "1", or "FALSE" or "0". In the case where "restrected" is either "TRUE" or "1", all rewriting and deletion of metadata is possible. In the case where "restrected" is either "FALSE" or "0", all rewriting and deletion of metadata is not possible. As described, there are only two options in regard to possibility for editing, including deleting, of attached information (metadata) about a content, that is, all editing is permitted or all editing is prohibited. Consequently, for example, when one who manages metadata prohibits editing of metadata for the purpose of preventing disorderly changes, the user cannot even change the title of a content to a name that the user can easily recognize. Thus, there is a problem that in order to suit the convenience of metadata management, the user's request cannot be met.

The present invention has an object to solve the above described problem and aims at providing a metadata management device and a metadata use device which are capable of improving convenience for users while enabling precise management of attached information (metadata) about a content by the CDS in the UPnP-AV architecture.

### Means to Solve the Problems

In order to achieve the above object, the metadata management device of the present invention is a metadata management device which provides a multimedia content to a terminal via a network, the metadata management device including: a list read out unit which reads out, from a storage unit, list information which includes a list of editability information indicating whether or not editing of attribute information about the multimedia content is permitted; and a list output unit which sends the list information, read out by the list read out unit, to the terminal via the network.

Further, the list read out unit reads out, from the storage unit, the list information which includes information in which a list of the multimedia contents, attribute information about each of the multimedia contents, and the editability information of the attribute information about each of the multimedia contents are associated with each other.

Furthermore, the metadata management device further includes the storage unit.

As described above, the metadata management device according to the present invention obtains, from the storage unit which is provided externally or internally, an item which indicates possibility for editing each item of attached information (metadata) about each content, and sends the obtained information to the terminal. Consequently, it is possible to manage, on an item-by-item basis, possibility for editing. Further, the user of the terminal is able to change the details of metadata within a range that one who manages metadata permits editing of, and thus the user's convenience improves.

Preferably, the metadata management device further includes: an editing request reception unit which receives attribute information which is sent from the terminal and has been edited by a user; an editing judgment unit which judges whether or not editing of the received attribute information is permitted, by referring, from among the list information read out by the list read out unit, to the editability information corresponding to the edited attribute information received by the editing request reception unit; and a metadata editing process unit which updates the attribute information to the corresponding edited attribute information received by the editing request reception unit, and notifies the terminal that the editing has been successful, in the case where the editing judgment unit judges that the editing is permitted.

Further, the metadata editing process unit further notifies the terminal that the editing has been unsuccessful, in the case where the editing judgment unit judges that the editing is not permitted.

As described above, the edited metadata which is sent from the terminal is obtained, the details are updated, and the user is notified of whether or not the update has been successful. Therefore, the details of the metadata which is permitted for editing and which the user has edited can be reflected in the storage unit, and the user is able to confirm that the edited details have been reflected in the attribute information stored in the storage unit. Consequently, it is possible to improve the user's convenience.

Further, in order to achieve the above object, the metadata use device of the present invention is a metadata use device which obtains a multimedia content from a server via a network, the metadata use device including a list obtainment unit which obtains, via the network, a list of editability information indicating whether or not editing of attribute information about the multimedia content is permitted.

Furthermore, the list obtainment unit obtains, from the server, information of the list including a list of the multimedia contents, attribute information about each of the multimedia contents, and the editability information about each of the multimedia contents which are associated with each other. The metadata use device further includes an editable attribution extraction unit which extracts editable attribute information which is attribute information permitted for editing, by referring to the list information obtained by the list obtainment unit.

As described above, the item which indicates possibility for editing each item of the attached information (metadata) about each content is obtained from the server. As a result, the user of the terminal can obtain, on the terminal, the item permitted for editing.

Preferably, the metadata use device further includes: a display control unit which displays, on a monitor connected to the metadata use device, an item of the editable attribute information extracted by the editable attribute extraction unit; and a selection acceptance unit which accepts an item of the editable attribute information, selected by a user from among a list of the items of the editable attribute information displayed on the monitor by the display control unit.

As described above, the metadata use device according to the present invention causes the monitor to display the information obtained from the server, and accepts the selection of the attribute information that the user wishes to edit. As a result, the user can select the attribute information upon checking, on the monitor connected to a general terminal, the list of the items of the attached content information (metadata) which are permitted for editing. Thus, the user's convenience improves.

More preferably, the metadata use device includes an editing acceptance unit which accepts attribute information which is the editable attribute information corresponding to the item of the editable attribute information selected by the selection acceptance unit and which has been edited by the user.

Further, the metadata use device further includes: a display control unit which displays, on a monitor connected to the metadata use device, items of the editable attribute information extracted by the editable attribute extraction unit; and an editing acceptance unit which accepts attribute information which is the editable attribute information corresponding the item of the editable attribute information displayed by the display control unit and which has been edited by the user.

Furthermore, the metadata use device further includes a metadata editing request unit which sends, to the server, the edited attribute information accepted by the editing acceptance unit.

As described above, the metadata use device according to the present invention edits the attached information (metadata) about the content, referring to the display on the monitor, and sends the edited details to the server. As a result, the user of the terminal can reflect, in a device or an apparatus which manages metadata, the details of the change that he/she him/herself has made.

### Effects of the Invention

According to the present invention, it is possible to manage editing, on an item-by-item basis, of attached information (metadata) about a content in the UPnP-AV architecture, and thus it is possible to achieve an improvement in convenience for management of metadata in preventing disorderly changes by users, and an improvement in convenience for users who wish to make a change to metadata.

### Brief Description of Drawings

FIG. 1 is a diagram showing configuration of an entire system of a first embodiment.
FIG. 2 is a diagram showing a sequence of a content list obtainment process according to the first embodiment.
FIG. 3 is a diagram showing an example of a content list screen displayed on a display device.
FIG. 4 is a diagram showing a first example of attached file information (metadata).
FIG. 5 is a diagram showing a sequence of an attached file information (metadata) editing process.
FIG. 6 is a diagram showing an example of an editable property list screen.
FIG. 7 is a diagram showing an example of an updated content list screen displayed on the display device.
FIG. 8 is a diagram showing a second example of attached file information (metadata).
FIG. 9 is a diagram showing configuration of an entire system of a second embodiment.
FIG. 10 is a diagram showing a sequence of content list obtainment according to the second embodiment.
FIG. 11 is a diagram showing a third example of attached file information (metadata).
FIG. 12 is a diagram showing a first example of a CDS:GetUpdatableProperties request.
FIG. 13 is a diagram showing a first example of a CDS:GetUpdatableProperties response.
FIG. 14 is a diagram showing a second example of the CDS:GetUpdatableProperties request.
FIG. 15 is a diagram showing a second example of the CDS:GetUpdatableProperties response.

### Numerical References

- 101: Metadata management device
- 102: Metadata use device
- 103: Network
- 104: Communication process unit
- 105: Content list output unit
- 106: Metadata editing process unit
- 107: List information storage unit
- 108: Communication process unit
- 109: Content list obtainment unit
- 110: Metadata editing request unit
- 111: GUI process unit
- 112: Remote control
- 113: Display device
- 114: Content file
- 115: Attached file information (metadata)
- 201: CDS: Browse request
- 202: CDS:Browse response
- 301, 302, 303, 304: Content
- 501: CDS:UpdateObject request
- 502: CDS:UpdateObject response
- 601: Title editing button
- 602: Genre editing button
- 1001: CDS:GetUpdatableProperties request
- 1002: CDS:GetUpdatableProperties response
- 1601: Property editability information obtainment unit

- 1602: Property editability information output unit

### Best Mode for Carrying Out the Invention

The following describes the best mode for carrying out the present invention with reference to drawings.

### (First Embodiment)

A first embodiment of the present invention is described with reference to the drawings.

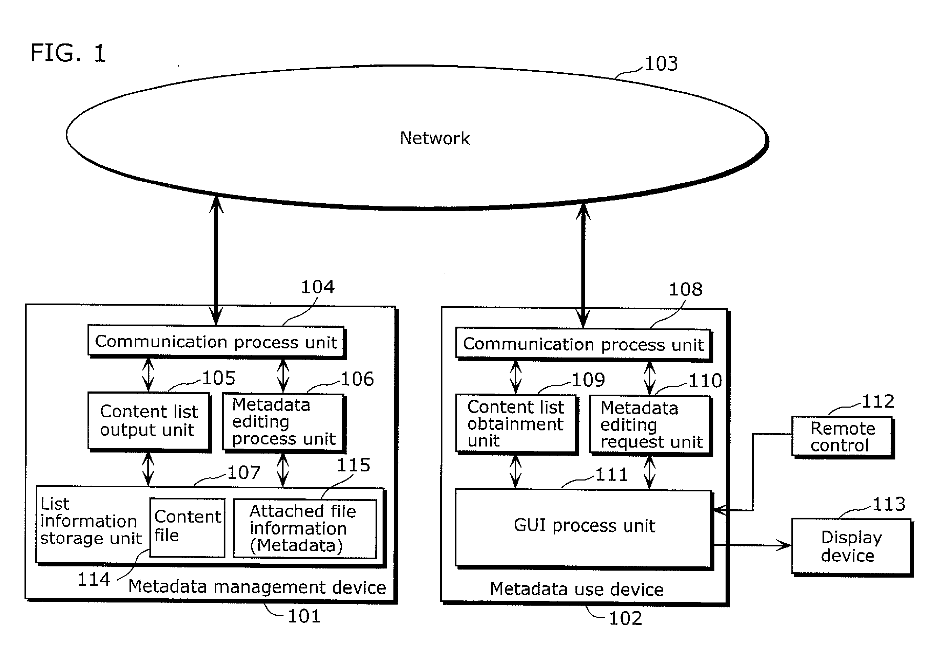

FIG. 1 is a diagram showing configuration of an entire system of the first embodiment.

In the first embodiment, a metadata management device 101 and a metadata use device 102 are connected via a network 103.

The metadata management device 101 includes a communication process unit 104, a content list output unit 105, a metadata editing process unit 106 and a list information storage unit 107.

The metadata use device 102 includes a communication process unit 108, a content list obtainment unit 109, a metadata editing request unit 110, a GUI process unit 111, a remote control 112, and a display device 113.

Both the metadata management device 101 and the metadata use device 102 are in conformity with the UPnP-AV architecture defined by the Universal Plug and Play (UPnP). The metadata management device 101 has a Content Directory Service (CDS) function, and the metadata use device 102 has a Control Point (CP) function which corresponds to the CDS.

First, each part included in the metadata management device 101 is described.

The list information storage unit 107 stores a content file 114, attached file information (metadata) 115 written in the DIDL-Lite format, and is embodied as a recording medium such as a Hard Disk Drive (HDD).

Details of the content file 114 of the present embodiment are a multimedia content such as video and music.

Details of the attached file information (metadata) 115 of the present embodiment are attribute information about each content such as a title, a genre and a creation date of each content file, and editability information indicating whether or not editing of each piece of the attribute information by a user is permitted.

In other words, the list information storage unit 107 is an example of: a storage unit which stores list information which includes a list of editability information indicating whether or not editing of attribute information about the multimedia content is permitted; and a storage unit which stores the list information which includes information in which a list of the multimedia contents, attribute information about each of the multimedia contents, and the editability information of the attribute information about each of the multimedia contents are associated with each other.

The content list output unit 105 reads out, from the list information storage unit 107, the attached file information (metadata) 115 stored in the list information storage unit 107 in response to a content obtainment request from the metadata use device 102. Further, via the communication process unit 104, the content list output unit 105 outputs the attached file information (metadata) 115 to the metadata use device 102 which outputted the obtainment request.

In other words, the content list output unit 105 is an example of: a list read out unit which reads out, from the storage unit, the list information which includes the list of editability information indicating whether or not editing of the attribute information about the multimedia content is permitted; and a list output unit which sends the list information, read out by the list read out unit, to the terminal via the network.

Also in other words, the content list output unit 105 is an example of a list read out unit which reads out, from the storage unit, the list information which includes the information in which the list of the multimedia contents, the attribute information about each of the multimedia contents, and the editability information of the attribute information about each of the multimedia contents are associated with each other.

The metadata editing process unit 106 obtains edited attached information (metadata) about a content, that is, attached information (metadata) about a content which has been edited by the user of the metadata use device 102 using the metadata use device 102.

Furthermore, the metadata editing process unit 106 refers to the attached file information (metadata) 115 stored in the list information storage unit 107 so as to judge whether or not an item corresponding to the attached information (metadata) about the content which has been obtained and edited is an item for which the user is permitted to edit.

In addition, when judging that the item corresponding to the attached file information (metadata) which has been obtained and edited is an item for which the user is permitted to edit, the metadata editing process unit 106 updates the details of the attached file information (metadata) 115 stored in the list information storage unit 107, and notifies the metadata use device 102 that the details of the attached file information (metadata) 115 stored in the list information storage unit 107 have been updated successfully in accordance with the edited attached file information (metadata).

Moreover, when judging that the item corresponding to the metadata which has been obtained and edited is not an item for which the user is permitted to edit, the metadata editing process unit 106 does not update the details stored in the list information storage unit 107, and notifies the metadata use device 102 that the details stored in the list information storage unit 107 have not been updated unsuccessfully in accordance with the edited attached information (metadata) about the content.

In other words, the metadata editing process unit 106 is an example of: an editing request reception unit which receives attribute information which is sent from the terminal and has been edited by a user; an editing judgment unit which judges whether or not editing of the received attribute information is permitted, by referring, from among the list information read out by the list read out unit, to the editability information corresponding to the edited attribute information received by the editing request reception unit; and a metadata editing process unit which updates the attribute information to the corresponding edited attribute information received by the editing request reception unit, and notifies the terminal that the editing has been successful, in the case where the editing judgment unit judges that the editing is permitted.

Also in other words, the metadata editing process unit 106 is an example of a metadata editing process unit which notifies the terminal that the editing has been unsuccessful, in the case where the editing judgment unit judges that the editing is not permitted.

Next, each part included in the metadata use device 102 is described.

Via the network 103, the metadata use device 102 is capable of editing the attached file information (metadata) 115 stored in the list information storage unit 107.

The remote control 112 is an appliance with which the user operates the metadata use device 102.

When the user is to edit the attached file information (metadata) 115, prior to the editing, the content list obtainment unit 109 obtains the content list which lists content files 114 stored in the list information storage unit 107, from the metadata management device 101 via the network 103.

In other words, the content list obtainment unit 109 is an example of a list obtainment unit which obtains, via the network, the list of editability information indicating whether or not editing of attribute information about the multimedia content is permitted.

Also in other words, the content list obtainment unit 109 is an example of: a list obtainment unit which obtains, from the server, list information including the list of the multimedia contents, the attribute information about each of the multimedia contents, and the editability information about each of the multimedia contents which are associated with each other; and an editable attribution extraction unit which extracts editable attribute information which is attribute information permitted for editing, by referring to the list information obtained by the list obtainment unit.

The GUI process unit 111 causes the display device 113 to display the attached file information (metadata) 115 obtained by the content list obtainment unit 109.

Further, the GUI process unit 111 accepts attached file information (metadata) which is the attached file information (metadata) 115 displayed on the display device 113, and edited by the user using such an input appliance as the remote control 112 and a keyboard (not shown in the figure), and passes, to the metadata editing request unit 110, the accepted attached file information (metadata) that has been edited.

In other words, the GUI process unit 111 is an example of a display control unit which displays, on a monitor connected to the metadata use device, items of the editable attribute information extracted by the editable attribute extraction unit; a selection acceptance unit which accepts an item of the editable attribute information, selected by a user from among a list of the items of the editable attribute information displayed on the monitor by the display control unit; and an editing acceptance unit which accepts attribute information which is the editable attribute information corresponding to the item of the editable attribute information selected by the selection acceptance unit and which has been edited by the user.

Also in other words, the GUI process unit 111 is an example of: a display control unit which displays, on a monitor connected to the metadata use device, items of the editable attribute information extracted by the editable attribute extraction unit; and an editing acceptance unit which accepts attribute information which is the editable attribute information corresponding to the item of the editable attribute information displayed by the display control unit and which has been edited by the user.

The metadata editing request unit 110 sends, to the metadata management device 101 via the communication process unit 108, a request for updating the attached file information (metadata) 115 stored in the metadata management device 101 to the attached file information which has been edited by the user.

In other words, the metadata editing request unit 110 is an example of a metadata editing request unit which sends, to the server, the edited attribute information accepted by the editing acceptance unit.

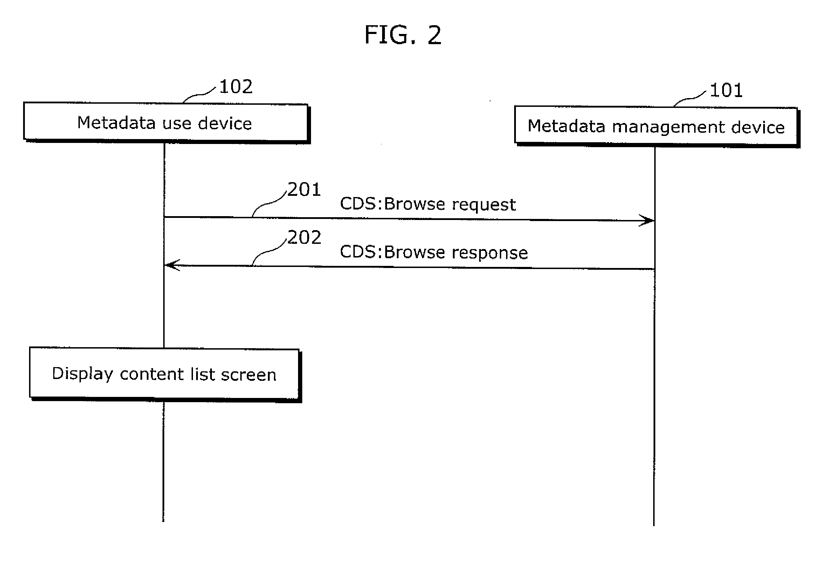

Next, a content list obtainment process, that is, a process in which the metadata use device 102 obtains a list of contents, is described with reference to FIG. 2.

FIG. 2 is a diagram showing a sequence of the content list obtainment process according to the first embodiment.

Upon accepting a content list obtainment operation from the user, the GUI process unit 111 instructs the content list obtainment unit 109 to obtain a content list. Upon receiving the instruction, the content list obtainment unit 109 instructs the communication process unit 108 to send a content list obtainment request. Upon receiving the instruction, the communication process unit 108 sends the content list obtainment request, as a CDS:Browse request 201, to the communication process unit 104 via the network.

Upon receiving the CDS:Browse request 201, the communication process unit 104 instructs the content list output unit 105 to output the content list. Upon receiving the instruction, the content list output unit 105 reads out the attached file information (metadata) 115 from the list information storage unit 107, and passes the attached file information (metadata) 115 to the communication process unit 104. The communication process unit 104 sends the attached file information (metadata) 115, as a CDS:Browse response 202, to the communication process unit 108 via the network.

Upon receiving the CDS:Browse response 202, the communication process unit 108 passes the CDS:Browse response 202 to the content list obtainment unit 109. The content list obtainment unit 109 interprets the attached file information (metadata) 115, and instructs the GUI process unit 111 to render a content list screen. Upon receiving the instruction, the GUI process unit 111 causes the display device 113 to display the content list screen.

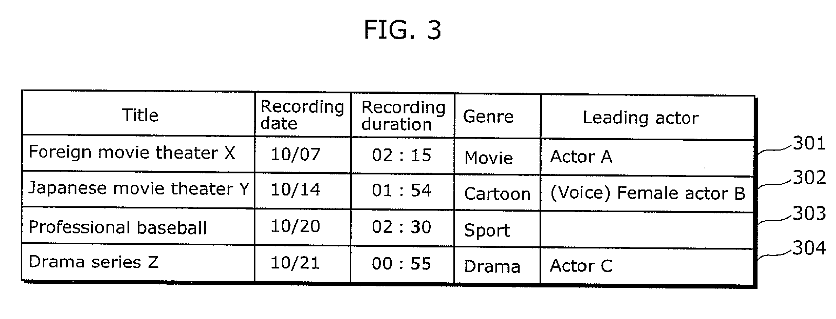

FIG. 3 is a diagram showing an example of the content list screen displayed on the display device 113. The example of the content list screen display shown in the figure includes four contents 301, 302, 303, and 304, and includes attached file information (metadata) 115, namely, "title", "recoding date", "recording duration", "genre", and heading actor". For example, the figure shows an example where the attached file information (metadata) 115 about the content 301 is displayed on the display device 113, the attached file information (metadata) 115 indicating that "title" is "foreign movie theater X", "recoding date" is October 7, "recording duration" is 2 hours and 15 minutes, "genre" is movie, and "leading actor" is an actor A.

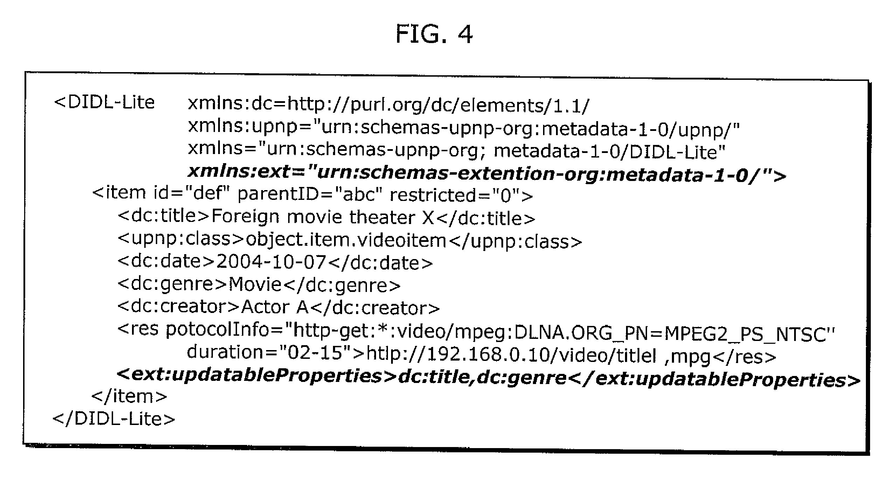

Next, a specific example of the attached file information (metadata) 115 which is sent to the metadata use device 102 from the metadata management device 101 is described with reference to FIG. 4.

FIG. 4 is a diagram showing a first example of the attached file information (metadata) 115.

In the attached file information (metadata) 115, a property, namely, ext:updatableProperties, is added to the conventional DIDL-Lite as a tag. Values of the property, ext:updatable Properties, are character strings written in the Comma Separated Values (CSV) format, and lists properties which can be edited using a CDS:UpdateObject.

Here, it is assumed that the properties include both an element and an attribute.

Since the conventional DIDL-Lite has indicated the editability of the properties which are included in the attached file information (metadata) 115 by a value of @restricted (that is, 0 or 1), not knowing which specific property is editable has been a problem. However, the attached file information (metadata) 115, with use of the property, namely, ext:updatableProperties, allows obtainment of property editability information indicating which specific property is editable.

The figure shows an example of a case where "foreign movie theater X" which is an attribute of a property, namely, dc:title, and "movie" which is an attribute of a property, namely, dc:genre, are editable.

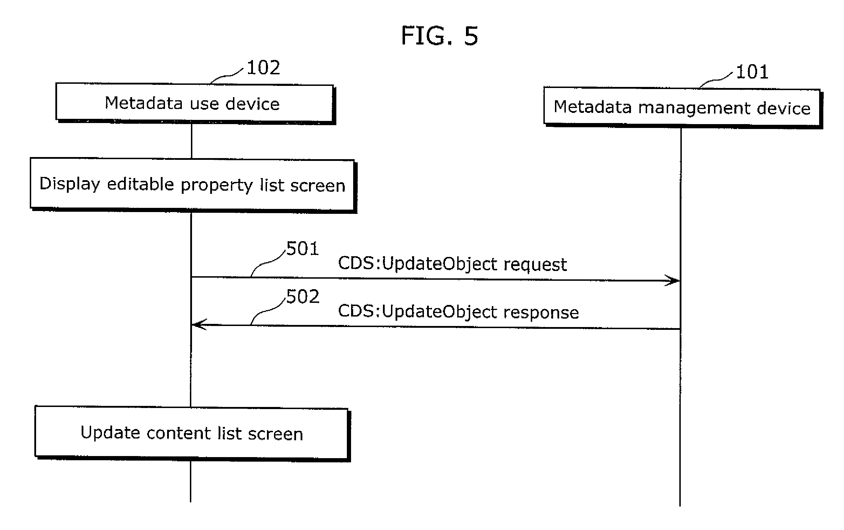

Further, with reference to FIG. 5, a process in which the metadata use device 102 edits the attached file information (metadata) 115 via the network is described. As an example, a process in which the title of the content 301 is edited from "foreign movie theater X" to "foreign movie XYZ" is described.

FIG. 5 is a diagram showing a sequence of the attached file information (metadata) editing process.

Upon accepting the user's selection, from the content list screen displayed on the display device 113, of the content file 114 that includes the attached file information (metadata) 115 that the user wishes to edit, the GUI process unit 101 causes the display device 113 to display a list of items of the attached file information (metadata) 115 for which editing is permitted, among the attached file information (metadata) 115 which corresponds to the selected content file 114.

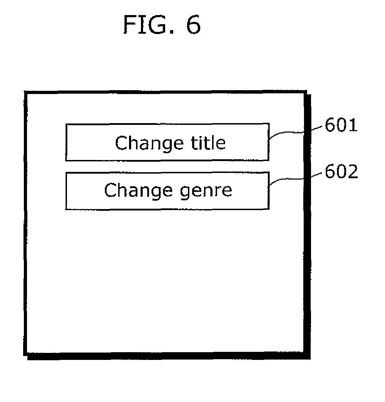

FIG. 6 is a diagram showing an example of an editable property list screen. The figure shows a case where the content 301 having the "title" as "foreign movie theater X" is selected from the content list screen shown in FIG. 3, and where the details of the attached file information (metadata) 115 about the content 301 are what is shown in FIG. 4.

As FIG. 4 shows, the property, namely, ext:updatableProperties, of the attached file information (metadata) 115 about the content file 114 indicates that the title and the genre are editable. Therefore, a title editing button 601 and a genre editing button 602 are displayed on the editable property list screen.

When the user presses the title editing button 601 and inputs a new title "foreign movie XYZ" on the editable property list screen, the GUI process unit 111 instructs the metadata editing request unit 110 to edit the title to the new title "foreign movie XYZ".

Upon receiving the instruction, the metadata editing request unit 110 instructs the communication process unit 108 to send, to the metadata management device 101, a title editing request to edit the title to the new title "foreign movie XYZ".

Upon receiving the instruction, the communication process unit 108 sends the title editing request, as a CDS:UpdateObject request 501, to the communication process unit 104 of the metadata management device 101 via the network.

Upon receiving the CDS:UpdateObject request 501, the communication process unit 104 notifies the metadata editing process unit 106 of the title editing request to edit the title to the new title "foreign movie XYZ".

Upon receiving the notification, the metadata editing process unit 106 judges whether or not editing of the property of the content file 114 included in the editing request, that is, editing of the attached file information (metadata) 115, is permitted.

To be more specific, the metadata editing process unit 106 refers to the list information storage unit 107 so as to refer to the attached file information (metadata) 115 corresponding to the content file 114 for which the request is made, in order to check whether or not the title of the content file 114 is the attached file information (metadata) 115 included in the values of the property ext:updatableProperties.

As shown in FIG. 4, the title which is one of the pieces of the attached file information (metadata) included in the content 301 that the user has selected is included in the values of the property ext:updatableProperties.

Therefore, the metadata editing process unit 106 edits the title of the content 301 included in the attached file information (metadata) 115 from "foreign movie theater X" to "foreign movie XYZ", and notifies the communication process unit 104 that the editing has been successful.

Upon receiving the notification, the communication process unit 104 sends a CDS:UpdateObject response 502 to the communication process unit 108 via the network.

Upon receiving the CDS:UpdateObject response 502, the communication process unit 108 notifies the metadata editing request unit 110 of the CDS:UpdateObject response 502.

Upon receiving the notification, the metadata editing request unit 110 instructs the GUI process unit 111 to update the content list screen. Upon receiving the instruction, the GUI process unit 111 updates the content list screen, and causes the display device 113 to display the updated content list screen.

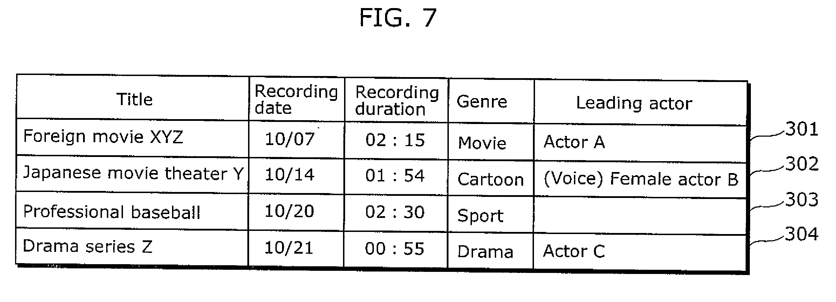

FIG. 7 is a diagram showing an example of the updated content list screen displayed on the display device.

The title of the content 301 which the user has selected is updated from "foreign movie theater X" as shown in FIG. 3 showing the content list screen before the update, to "foreign movie XYZ" as shown in the present figure showing the updated content list screen.

Note that although, in FIG. 4, the property, namely, ext:updatableProperties, is attached to "item", it may be attached to "container".

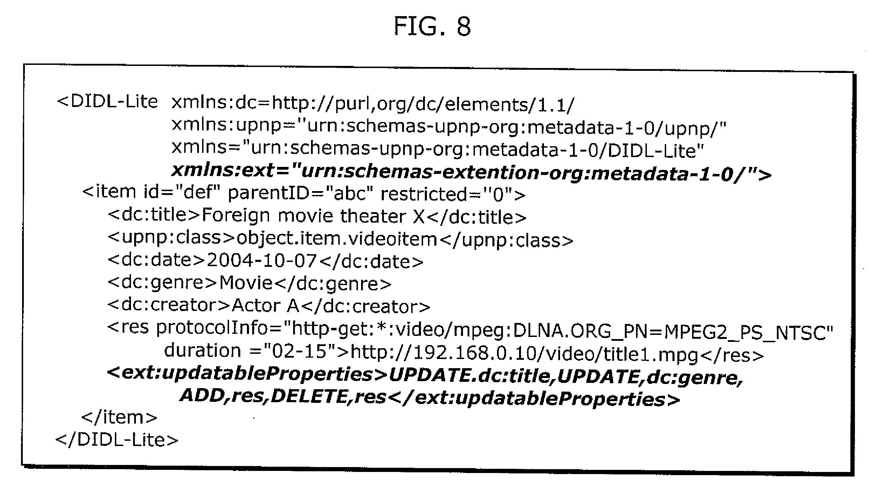

Further, FIG. 8 shows a second example of the attached file information (metadata) 115. As the figure shows, the values of the property, namely, ext:updatableProperties, may be structured in such manner as shown in FIG. 8.

In the figure, every other character string (odd-numbered) included in the values of the property, ext:updatableProperties, is one of UPDATE, ADD, and DELETE.

The character string, UPDATE, indicates that a value of a property shown immediately after UPDATE is editable. The character string, ADD, indicates that new data is addable to a property shown immediately after ADD. The character string, DELETE, indicates that what already exists in a property shown immediately after DELETE is deletable.

Note that in the present embodiment, the description has been provided using dc:title and dc:genre as properties, namely, ext:updatableProperties. However, the property may be a different property defined by the CDS, or a property which can be uniquely defined by a vendor.

Note that an updatable property, an addable property, and a deletable property may be divided as ext:updatableProperties, ext:AdditionalProperties, and ext:deletableProperties, respectively, for example. By doing so, the same effect can be obtained.

### (Second Embodiment)

Next, a metadata management device according to a second embodiment is described. With reference to FIGS. 1, 2, 3, 5, 6, 7, 9, 10, 11, 14 and 15, a description of the second embodiment of the present invention is provided. Note that for constituent elements and process procedures in FIGS. 1, 2, 3, 5, 6 and 7 in the present embodiment which are the same as the constituent elements and process procedures in these figures described in the first embodiment, the same numerical references are given, and their detailed description is omitted.

In the first embodiment, the metadata use device 102 obtains editable property information in regard to the attached file information (metadata) held in the metadata management device 101 by the CDS:Browse request 201. In contrast to this, in the second embodiment, the metadata use device 102 obtains the editable property information in regard to the attached file information (metadata) held in the metadata management device 101 by a CDS:GetUpdatableProperties request which is different from the CDS: Browse request 201.

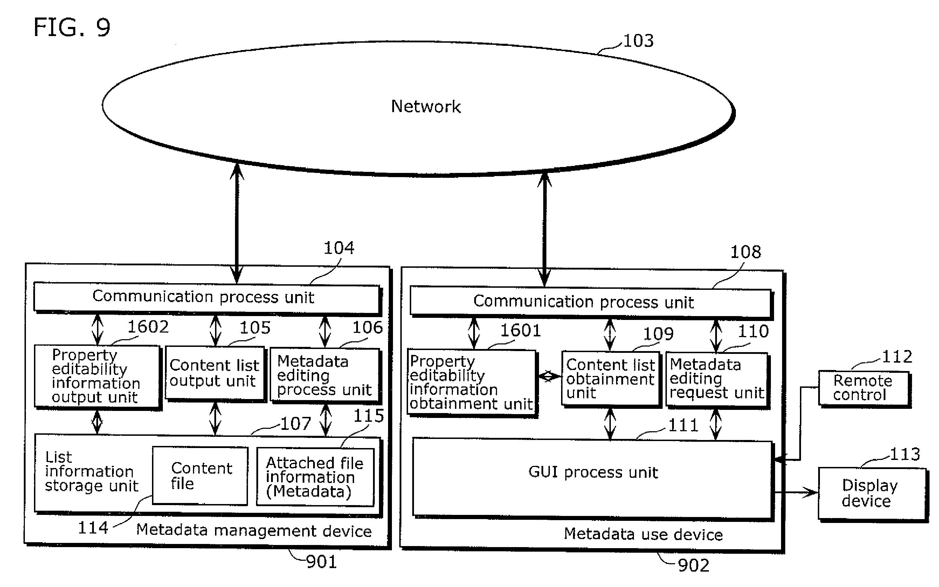

FIG. 9 is a diagram showing configuration of an entire system of the second embodiment.

A metadata management device 901 of the present embodiment includes a communication process unit 104, a content list output unit 105, a metadata editing process unit 106, a list information storage unit 107, and a property editability information output unit 1602.

Further, a metadata use device 902 of the present embodiment includes a communication process unit 108, a content list obtainment unit 109, a metadata editing request unit 110, a GUI process unit 111, a remote control 112, a display device 113, and a property editability information obtainment unit 1601.

For the parts in the figure having the same functions as the functions of the parts shown in FIG. 1, the same numerical references as that in FIG. 1 are given.

Upon receiving an instruction from the content list obtainment unit 109 to obtain property editability information, the property editability information obtainment unit 1601 instructs the communication process unit 108 to send a property editability information request.

Upon receiving the instruction from the communication process unit 104 to output the property editability information request, the property editability information output unit 1602 reads out, from the list information storage unit 107, a property, namely, ext:updatableProperties, included in the attached file information (metadata) 115, and passes the property ext:updatableProperties to the communication process unit 104.

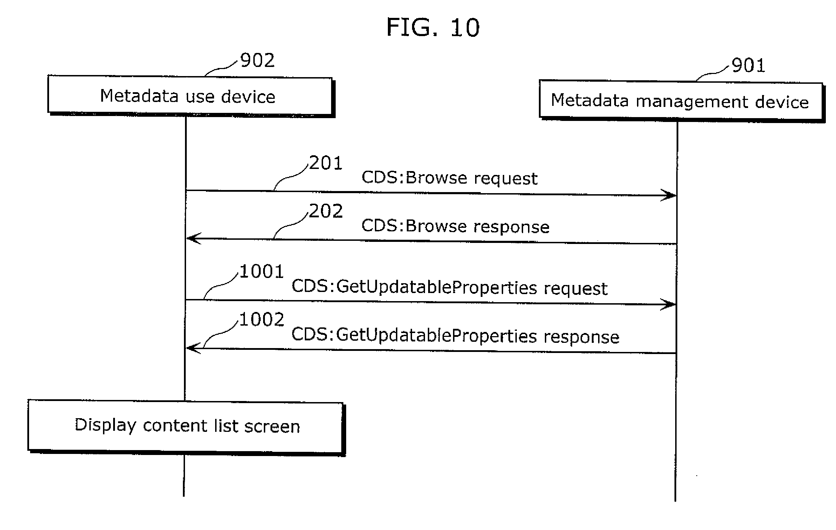

FIG. 10 shows a diagram showing a sequence of content list obtainment according to the second embodiment.

Upon accepting a content list obtainment operation from the user, the GUI process unit 111 instructs the content list obtainment unit 109 to obtain a content list. Upon receiving the instruction, the content list obtainment unit 109 instructs the communication process unit 108 to send a content list obtainment request. Upon receiving the instruction, the communication process unit 108 sends a content list obtainment request, as a CDS:Browse request 201, to the communication process unit 104 via the network.

Upon receiving the CDS:Browse request 201, the communication process unit 104 instructs the list output unit to output the content list. Upon receiving the instruction, the content list output unit 105 reads out the attached file information (metadata) 115 from the list information storage unit 107, and passes the attached file information (metadata) 115 to the communication process unit 104. The communication process unit 104 sends the attached file information (metadata) 115, as a CDS:Browse response 202, to the communication process unit 108 via the network.

Upon receiving the CDS:Browse response 202, the communication process unit 108 passes the CDS:Browse response 202 to the content list obtainment unit 109.

Subsequently, the content list obtainment unit 109 instructs the property editability information obtainment unit 1601 to obtain property editability information. Upon receiving the instruction, the property editability information obtainment unit 1601 instructs the communication process unit 108 to send a property editability information request.

Upon receiving the instruction, the communication process unit 108 sends the property editability information obtainment request, as a CDS:GetUpdatableProperties request 1001, to the communication process unit 104 via the network.

Upon receiving the CDS: GetUpdatableProperties request 1001, the communication process unit 104 instructs the property editability information output unit 1602 to output the property editability information.

Upon receiving the instruction, the property editability information output unit 1602 reads out, from the list information storage unit 107, the property, namely, ext:updatable Properties, included in the attached file information (metadata) 115, and passes the property ext:updatableProperties to the communication process unit 104.

The communication process unit 104 sends the property ext:updatableProperties, as a CDS:GetUpdatableProperties response 1002, to the communication process unit 108 via the network.

Upon receiving the CDS:GetUpdatableProperties response 1002, the communication process unit 108 passes the CDS:GetUpdatableProperties response 1002 to the property editability information obtainment unit 1601.

The property editability information obtainment unit 1601 extracts the property editability information from the received CDS: GetUpdatableProperties response 1002, and passes the extracted property editability information to the content list obtainment unit 109.

The content list obtainment unit 109 interprets the attached file information (metadata) 115, and instructs the GUI process unit 111 to render a content list screen. Upon receiving the instruction, the GUI process unit 111 outputs the content list screen to the display device 113. FIG. 3 is a diagram showing an example of the content list screen displayed on the display device 113 at this time.

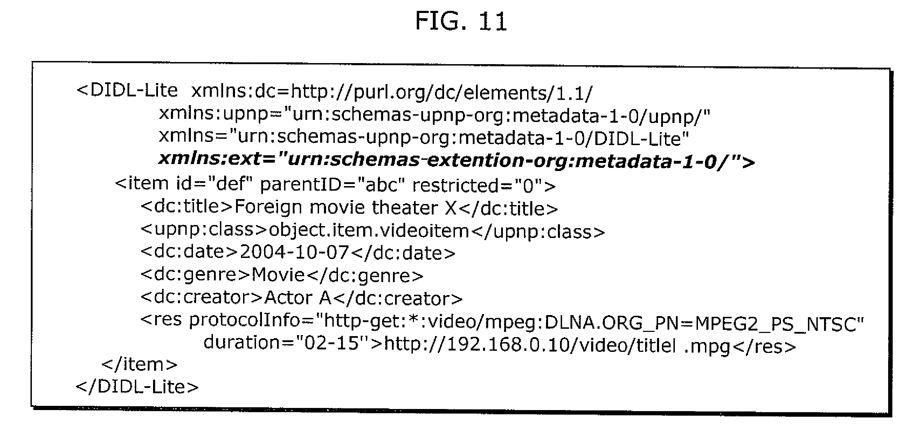

FIG. 11 is a diagram showing a third example of the attached file information (metadata) 115.

A difference between FIG. 11 and FIG. 4 is that the property, ext:updatableProperties, included in the attached file information (metadata) shown in FIG. 4 is not included in attached file information (metadata) shown in FIG. 11.

The attached file information (metadata) exemplified in FIG. 11 is standard attached file information (metadata) in which the CDS is not extended.

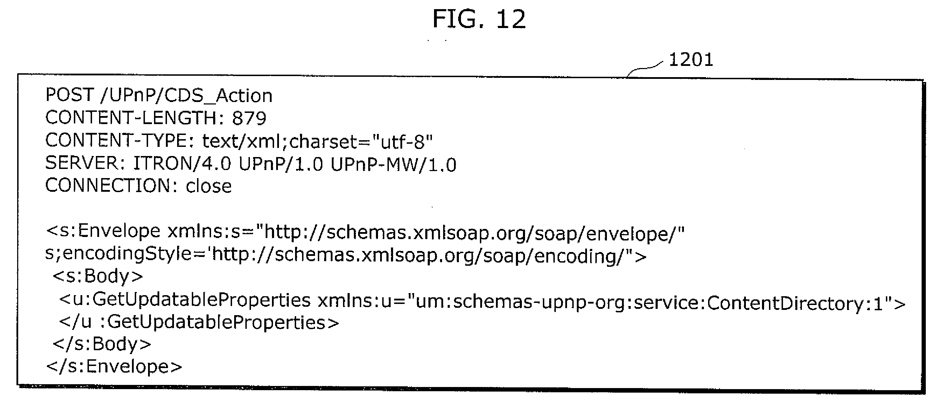

FIG. 12 is a diagram showing a first example of the CDS:GetUpdatableProperties request 1001. The CDS: GetUpdatableProperties request 1001 is sent to the metadata management device 901 by the metadata use device 902.

The CDS:GetUpdatableProperties request 1001 is in conformity with the Simple Object Acess Protocol (SOAP) defined by the UPnP, and nothing is specified in an IN argument.

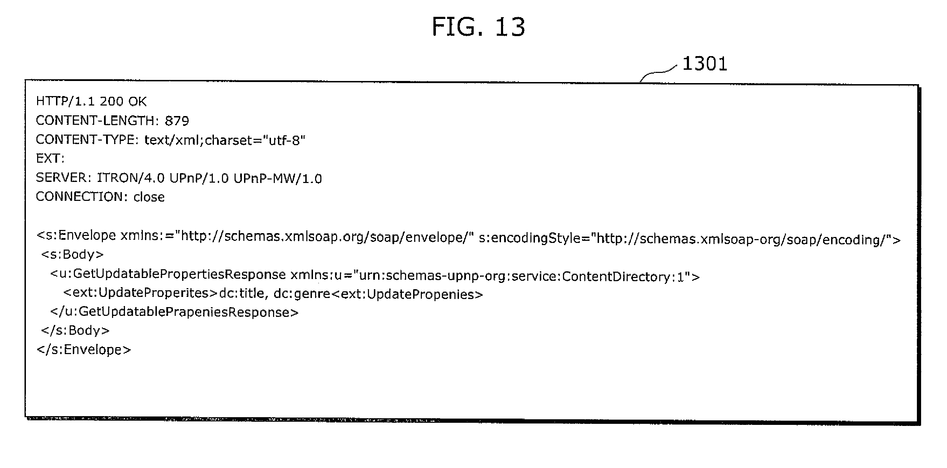

Next, FIG. 13 is a diagram showing a first example of the CDS: GetUpdatableProperties response 1002. The figure shows an example of a response message of the CDS:GetUpdatableProperties response 1002 that the metadata management device 101 replies in response to the CDS:GetUpdatableProperties request 1001 from the metadata use device 902. As with the CDS: GetUpdatableProperties request 1001, the CDS:GetUpdatableProperties response 1002 is also in conformity with the SOAP defined by the UPnP, and a tag of the property, namely, ext:updatableProperties is specified in an OUT argument. As with the first embodiment, properties which can be edited using the CDS: UpdateObject are listed in the tag of the property ext:updatableProperties, and are written in character strings of the CSV format.

Using the property ext:updatableProperties makes it possible to specifically indicate which property is editable.

The process which follows the process in which the metadata use device 102 edits the attached file information (metadata) 115 via the network is the same as the process in the first embodiment, and thus is omitted.

### (Third Embodiment)

Next, a metadata management device according to a third embodiment is described.

In the second embodiment, the metadata management device 901 receives the CDS:GetUpdatableProperties request 1001, as exemplified in FIG. 12, which is sent in order for the metadata use device 902 to obtain the property editability information. In contrast to this, a metadata management device 901 of the third embodiment requests property editability information per "item" or per "container" held by the metadata management device 901, as shown in FIG. 13.

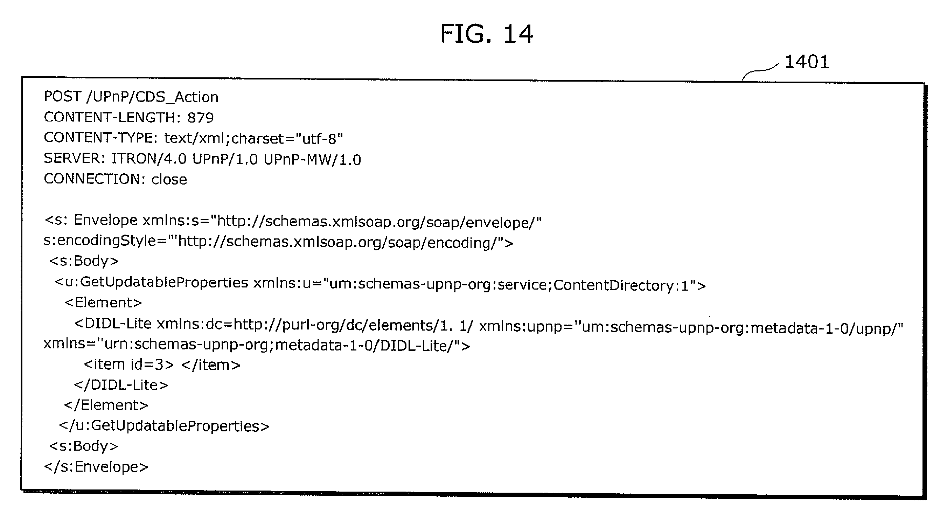

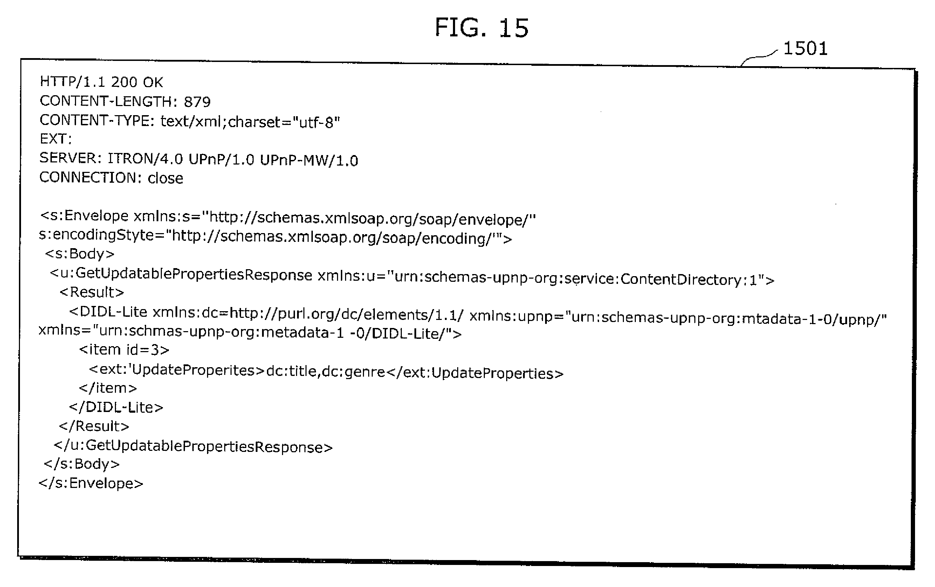

FIG. 14 is a diagram showing a second example of the CDS:GetUpdatableProperties request 1001. A CDS:GetUpdatableProperties request 1401 shown in FIG. 14 is in conformity with the Simple Object Acess Protocol (SOAP) defined by the UPnP. Further, the CDS:GetUpdatableProperties request 1401 is written in the DIDL-Lite format, and specifies in the IN argument an ID which is an identifier that identifies an "item" or a "container", the property editability information of which is desired to be obtained. Furthermore, upon receiving the CDS:GetUpdatableProperties request 1401 shown in FIG. 14, the metadata management device 901 sends the property editability information about the "item" or the "container" specified by the metadata use device 902 in a response message shown in FIG. 15 by the CDS:GetUpdatableProperties response 1002 instead of sending the property editability information in a response message shown in FIG. 13.

FIG. 15 is a diagram showing a second example of the CDS:GetUpdatableProperties response 1002. As with the CDS:GetUpdatableProperties request 1301 shown in FIG. 13, a CDS:GetUpdatableProperties response 1502 shown in FIG. 15 is also in conformity with the SOAP defined by the UPnP, and property identifying information corresponding to the "item" or the "container" specified by the CDS:GetUpdatableProperties request 1401 is written in the tag of the property ext:updatableProperties in the OUT argument.

As with the first embodiment, properties which can be edited using the CDS:UpdateObject are listed in the tag of the property ext:updatableProperties, and are written in character strings of the CSV format. Using the property ext:updatableProperties makes it possible to specifically indicate which property is editable.

In the present embodiment, only one "item" or one "container" is specified by: the CDS:GetUpdatableProperties request 1001 that the metadata use device 902 sends to the metadata management device 901; and the CDS:GetUpdatabfeProperties response 1002 that the metadata management device 901 sends to the metadata use device 902. However, two or more may be specified.

Note that in the present embodiment, the description has been provided using dc:title and dc:genre as properties ext:updatableProperties. However, the property may be a different property defined by the CDS, or a property which can be uniquely defined by a vendor.

In addition, by adding a function to "BrowseFlag" which is one of the parameters of CDS:Browse, the same effect can be obtained.

Although the metadata management devices 101 and 901, and the metadata use devices 102 and 902 according to the first through third embodiments have been described above, the present invention is not limited to these embodiments.

For example, although, in the first through third embodiments, the list information storage unit 107 is provided within the metadata management devices 101 and 901, the list information storage unit 107 may be provided outside the metadata management devices 101 and 901.

### Industrial Applicability

The present invention can be used for a device and the like which sends and receives a multimedia content via a network, and particularly for a content transmitting device which manages attached content information about a multimedia content, a content receiving device with which a user edits attached information about a content, and the like.

## Claims

1. A metadata management device which provides a multimedia content to a terminal via a network, said metadata management device comprising:
a list read out unit operable to read out, from a storage unit, list information which includes a list of editability information indicating whether or not editing of attribute information about the multimedia content is permitted; and
a list output unit operable to send the list information, read out by said list read out unit, to the terminal via the network.

2. The metadata management device according to Claim 1,
wherein said list read out unit is operable to read out, from the storage unit, the list information which includes information in which a list of the multimedia contents, attribute information about each of the multimedia contents, and the editability information of the attribute information about each of the multimedia contents are associated with each other.

3. The metadata management device according to Claim 2, further comprising the storage unit.

4. The metadata management device according to Claim 3, further comprising:
an editing request reception unit operable to receive attribute information which is sent from the terminal and has been edited by a user;
an editing judgment unit operable to judge whether or not editing of the received attribute information is permitted, by referring, from among the list information read out by said list read out unit, to the editability information corresponding to the edited attribute information received by said editing request reception unit; and
a metadata editing process unit operable to update the attribute information to the corresponding edited attribute information received by said editing request reception unit, and notify the terminal that the editing has been successful, in the case where said editing judgment unit judges that the editing is permitted.

5. The metadata management device according to Claim 4,
wherein said metadata editing process unit is further operable to notify the terminal that the editing has been unsuccessful, in the case where said editing judgment unit judges that the editing is not permitted.

6. A metadata use device which obtains a multimedia content from a server via a network, said metadata use device comprising
a list obtainment unit operable to obtain, via the network, a list of editability information indicating whether or not editing of attribute information about the multimedia content is permitted.

7. The metadata use device according to Claim 6,
wherein said list obtainment unit is operable to obtain, from the server, information of the list including a list of the multimedia contents, attribute information about each of the multimedia contents, and the editability information about each of the multimedia contents which are associated with each other, and
said metadata use device further comprising
an editable attribution extraction unit operable to extract editable attribute information which is attribute information permitted for editing, by referring to the list information obtained by said list obtainment unit.

8. The metadata use device according to Claim 7, further comprising:
a display control unit operable to display, on a monitor connected to said metadata use device, items of the editable attribute information extracted by said editable attribute extraction unit; and
a selection acceptance unit operable to accept an item of the editable attribute information, selected by a user from among a list of the items of the editable attribute information displayed on the monitor by said display control unit.

9. The metadata use device according to Claim 8 comprising
an editing acceptance unit operable to accept attribute information which is the editable attribute information corresponding to the item of the editable attribute information selected by said selection acceptance unit and which has been edited by the user.

10. The metadata use device according to Claim 7, further comprising:
a display control unit operable to display, on a monitor connected to said metadata use device, items of the editable attribute information extracted by said editable attribute extraction unit; and
an editing acceptance unit operable to accept attribute information which is the editable attribute information corresponding to the item of the editable attribute information displayed by said display control unit and which has been edited by the user.

11. The metadata use device according to Claim 10, further comprising
a metadata editing request unit operable to send, to the server, the edited attribute information accepted by said editing acceptance unit.

12. A metadata management method which is a method of providing a multimedia content to a terminal via a network using a computer, said metadata management step comprising:
a list read out step of reading out, from a storage unit, list information which includes a list of editability information indicating whether or not editing of attribute information about the multimedia content is permitted; and
a list output step of sending the list information, read out by said list read out unit, to the terminal via the network.

13. A metadata use method of obtaining a multimedia content from a server via a network using a computer, said metadata use method comprising
a list obtainment step of obtaining, via the network, a list of editability information indicating whether or not editing of attribute information about the multimedia content is permitted.

14. A metadata management program which is a program for providing a multimedia content to a terminal via a network, said program causing a computer to execute:
a list read out step of reading out, from a storage unit, list information which includes a list of editability information indicating whether or not editing of attribute information about the multimedia content is permitted; and
a list output step of sending the list information, read out by said list read out unit, to the terminal via the network.

15. A metadata use program for obtaining a multimedia content from a server via a network using a computer, said program causing the computer to execute
a list obtainment step of obtaining, via the network, a list of editability information indicating whether or not editing of attribute information about the multimedia content is permitted.

16. A metadata management and use system comprising:
a metadata management device which is connected to a network and sends a multimedia content; and
a metadata use device which is connected to the network, and receives the multimedia content,
wherein said metadata management device includes:
a list read out unit operable to read out, from a storage unit, list information which includes a list of editability information indicating whether or not editing of attribute information about the multimedia content is permitted; and
a list output unit operable to send the list information, read out by said list read out unit, to the terminal via the network, and
said metadata use device includes
a list obtainment unit operable to obtain, from said list output unit via the network, the list information outputted by said list output unit.
